# EUROPÄISCHE PATENTSCHRIFT

(11) **EP 3 037 703 B1**
(45) Veröffentlichungstag und Bekanntmachung des Hinweises auf die Patenterteilung: **05.07.2017**
(21) Anmeldenummer: 14004426.4
(22) Anmeldetag: 24.12.2014
(51) Int. Cl.: F16K 37/00, B60N 2/44, F15B 13/08, F16K 27/00

(54) **Ventilblock mit optionaler Druckmessung und Kraftfahrzeugsitz**
Valve block with optional pressure measurement and motor vehicle seat
Bloc de ventilation avec mesure de pression en option et siège de véhicule automobile

(43) Veröffentlichungstag der Anmeldung: 29.06.2016
(73) Patentinhaber: Faurecia Autositze GmbH, 31655 Stadthagen (DE)
(72) Erfinder: Ceglarek, Piotr, 40-807 Katowice (PL)
(74) Vertreter: Thielking & Elbertzhagen Patentanwälte Partnerschaft mbB

(56) Entgegenhaltungen:
- EP-A1- 2 461 046
- EP-A1- 2 769 878
- DE-A1-102004 053 200
- GB-A- 2 418 659

## Beschreibung

Die Erfindung betrifft einen Ventilblock, insbesondere zur Ansteuerung Druckluft befüllbarer Elemente eines Kraftfahrzeugsitzes sowie einen Kraftfahrzeugsitz mit einem solchen Ventilblock.

Bei Kraftfahrzeugen finden zunehmend Druckluft befüllbare Elemente zur Realisierung von Funktionen des Kraftfahrzeugsitzes Verwendung. Bei den Funktionen kann es sich beispielsweise um Verstellmöglichkeiten, wie z.B. die Einstellmöglichkeit einer Lordosenstütze handeln. Ebenfalls ist es möglich, Druckluft befüllbare Elemente zur Realisierung von Massagefunktionen einzusetzen, indem diese in kurzen Intervallen befüllt und wieder entleert werden. Für die Realisierung von Einstellfunktionen ist es hingegen regelmäßig erforderlich, einen konstanten Druck in dem Druckluft befüllbaren Element aufrecht zu erhalten.

Die Ansteuerung der Druckluft befüllbaren Elemente wird regelmäßig dadurch realisiert, dass diese mit Ausgängen eines Ventilblocks verbunden werden, welcher wiederum über einen Eingang mit einer Drucklufterzeugungseinrichtung ver-bunden wird. Dabei hängt die Gestaltung des Ventilblocks bzw. der Ventile im Ventilblock von der Art bzw. der ge-wünschten Funktion der Druckluft befüllbaren Elemente ab.

Soll ein Druckluft befüllbares Element eine Massagefunktion ausführen, so ist regelmäßig ein Steuerventil nötig, um das Druckluft befüllbare Element zum Füllen mit Druckluft mit der Drucklufterzeugungseinrichtung zu verbinden. Weiter ist ein Ablassventil notwendig, um das Druckluft befüllbare Element zu dessen Entleerung mit der Umgebungsluft zu verbinden. Zweckmäßigerweise werden beide Ventile regelmäßig im Ventilblock intern verschaltet, damit eine gemeinsame Leitung beide Ventile über den Ausgang des Ventilblocks mit dem Druckluft befüllbaren Element verbinden kann.

Sollen Einstellfunktionen über Druckluft befüllbare Elemente realisiert werden, so soll im Druckluft befüllbaren Element ein konstanter Druck aufrecht erhalten werden. Hierfür müssen beim Druckluft befüllbaren Element neben einem Steuerventil und einem Ablassventil Mittel zur Überwachung des Drucks zugeordnet sein. Zweckmäßigerweise wird eine entsprechende Druckmesskammer mit den Ventilen und/oder dem Ausgang verschaltet und so über den Ausgang und die ohnehin vorhandene Leitung mit dem Druckluft befüllbaren Element verbunden.

Nach dem Stand der Technik ist es bekannt, entweder eine Mehrzahl entsprechender Ventilanordnungen mit einem Steuerventil und einem Ablassventil in einem gemeinsamen Ventilblock anzuordnen und über eine gemeinsame, zwischen den Ventilen verlegte Druckluftzuleitung nach Art eines Common Rail Systems Druckluft zu versorgen, oder nach dem gleichen Prinzip eine Mehrzahl Ventilanordnungen mit Druckmesskammer zur Ermöglichung von Einstellfunktionen nach dem gleichen Prinzip anzuordnen.

Dabei werden nach dem Stand der Technik die Ventilanordnungen, d.h. jeweils ein Steuer- und ein Ablassventil und ggf. eine Druckmesskammer, einstückig ausgeführt.

Der Nachteil dabei ist, dass die so gebildeten Ventilblöcke bzw. die einstückigen Ventilmodule nicht flexibel verwendbar sind, d.h. die Teile für die Ventile können nur für eine Funktion - Massage oder Einstellung - verwendet werden. Sollen darüber hinaus unterschiedliche Funktionen realisiert werden, beispielsweise in einem Kraftfahrzeugsitz sowohl eine Massagefunktion als auch eine Einstellfunktion mit Druckluft befüllbaren Elementen ermöglicht werden, so sind nach dem Stand der Technik zwei Ventilblöcke erforderlich; einer für die Einstell- und einer für die Massagefunktion.

Zudem beanspruchen die nach dem Stand der Technik bekannten Module mit der zentral angeordneten gemeinsamen Druckluftzuleitung einen zu hohen Bauraum.

EP2461046 A1 offenbart ein Ventilblock nach dem Oberbegriff des Anspruchs 1.

Der Erfindung liegt daher die Aufgabe zugrunde, einen Ventilblock, einen Kraftfahrzeugsitz und eine Ventilzusammenstellung aufzuzeigen, die den flexibleren und kompakteren Aufbau eines Ventilblocks ermöglichen.

Die Aufgabe wird gelöst durch einen Ventilblock mit den Merkmalen des Anspruchs 1. Die Merkmale der abhängigen Ansprüche betreffen vorteilhafte Ausführungsformen.

Erfindungsgemäß werden die Steuerventile und die Ablassventile derart gestaltet, dass Steuerventile und Ablassventile sowohl zur Bildung von Ventilblöcken, die eine Druckmesseinrichtung aufweisen, als auch zur Bildung von Ventilblöcken, die keine Druckmesseinrichtung aufweisen, verwendbar sind.

Erfindungsgemäß können so mit den Ventilen Ventilblöcke zusammengestellt werden, welche je nach konkreter Anforderung eine entsprechende Anzahl Ausgänge zur Verbindung mit jeweils einem oder einer Mehrzahl Druckluft befüllbarer Elemente aufweisen, wobei es möglich ist, wahlweise jeden Ausgang mit einer Messung des Luftdrucks im Druckluft befüllbaren Element anzusteuern oder auf die Druckmesseinrichtung in vorteilhafter Weise im Hinblick auf Bauraum und Kosten für das jeweilige Paar aus Steuerventil und Ablassventil verzichten zu können.

Erfindungsgemäß ist die Basis eines solchen Ventilblocks daher eine Zusammenstellung von Ventilen, die ausgewählt sind aus einer Gruppe von Steuerventilen und einer Gruppe von Ablassventilen. Dabei sind die Steuer- und Ablassventile in diesen Gruppen derart gestaltet, dass ein Steuerventil entweder direkt mit einem Ablassventil oder über ein Druckmessmodul mit einem Ablassventil pneumatisch verbunden werden kann. Eine derartige Gestaltung ermöglicht es, entsprechend der jeweiligen Anforderungen eine Ventilzusammenstellung auszuwählen, mit der im Falle der Verwendung in einem Kraftfahrzeugsitz beliebige Kombinationen aus Massage- und Einstellfunktionen möglich sind. Dabei werden die Ventile quasi nach Art eines Baukastensystems zusammengestellt.

Vorzugsweise sind bei einem erfindungsgemäßen Ventilblock die Ablassventile auf einer von der Druckluftzuleitung abgewandten Seite der Steuerventile angeordnet. Dies ermöglicht die Realisierung von Ventilen mit den erfindungsgemäßen Baukasteneigenschaften, da so kompakte Steuerventile mit der gewünschten variablen Verbindbarkeit geschaffen werden können.

Die Druckluftzuleitung ist dabei zumindest im Wesentlichen senkrecht zu den Bewegungsrichtungen der Absperrkörper der Steuerventile angeordnet. So kann nach Art eines Common Rail Systems ein Ventilblock geschaffen werden, der einen gemeinsamen Drucklufteingang über die Druckluftzuleitung mit einer Mehrzahl Steuerventile verbindet. Vorzugsweise ist die Druckluftzuleitung über jedes Steuerventil wahlweise mit einem diesem Steuerventil zugeordneten Druckluftausgang verbindbar. Die Druckmesseinrichtungen und/oder Ablassventile sind vorzugsweise ebenfalls über das Steuerventil mit dem jeweiligen Steuerventil wahlweise verbindbar. Hierfür weist das Steuerventil vorzugsweise einen doppelt wirkenden Absperrkörper auf, der in einer ersten Stellung den dem Steuerventil zugeordneten Ausgang mit der Druckluftzuleitung und in einer zweiten Stellung den dem jeweiligen Steuerventil zugeordneten Ausgang mit einer Druckmesseinrichtung und/oder einem Ablassventil verbindet.

So kann es sich beispielsweise um ein Ventil mit einem vorzugsweise elektromagnetisch bewegten Absperrkörper handeln, an dessen voneinander abgewandten, insbesondere in Bewegungsrichtung des Absperrkörpers gegenüberliegenden, Seiten zwei Ventilsitze angeordnet sind. Vorzugsweise wird durch ein Rückstellelement, insbesondere eine Rückstellfeder, der Absperrkörper in eine Position gebracht, in der er die Verbindung zwischen dem dem jeweiligen Steuerventil zugeordneten Ausgang und der Druckluftzuleitung trennt, also verschließt.

Die Erfindung wird im Folgenden anhand der Figuren 1 bis 9 schematisch näher erläutert:
- Figur 1 -: zeigt ein beispielhaftes erfindungsgemäßes Steuerventil für einen erfindungsgemäßen Ventilblock,
- Figur 2 -: zeigt ein beispielhaftes erfindungsgemäßes Steuerventil, das mit einem Ablassventil direkt verbunden ist,
- Figur 3 -: zeigt ein beispielhaftes erfindungsgemäßes Steuerventil, das mit einem Ablassventil über ein Druckmessmodul pneumatisch verbunden ist,
- Figur 4 -: zeigt einen beispielhaften erfindungsgemäßen Ventilblock in einer perspektivischen Darstellung bei geöffnetem Gehäuse,
- Figuren 5 und 6 -: zeigen Schnittdarstellungen des in Figur 4 dargestellten beispielhaften erfindungsgemäßen Ventilblocks,
- Figur 7 -: zeigt eine leicht perspektivische Darstellung eines weiteren beispielhaften erfindungsgemäßen Ventilblocks,
- Figuren 8 und 9 -: zeigen Schnittdarstellungen des in Figur 7 dargestellten beispielhaften erfindungsgemäßen Ventilblocks.

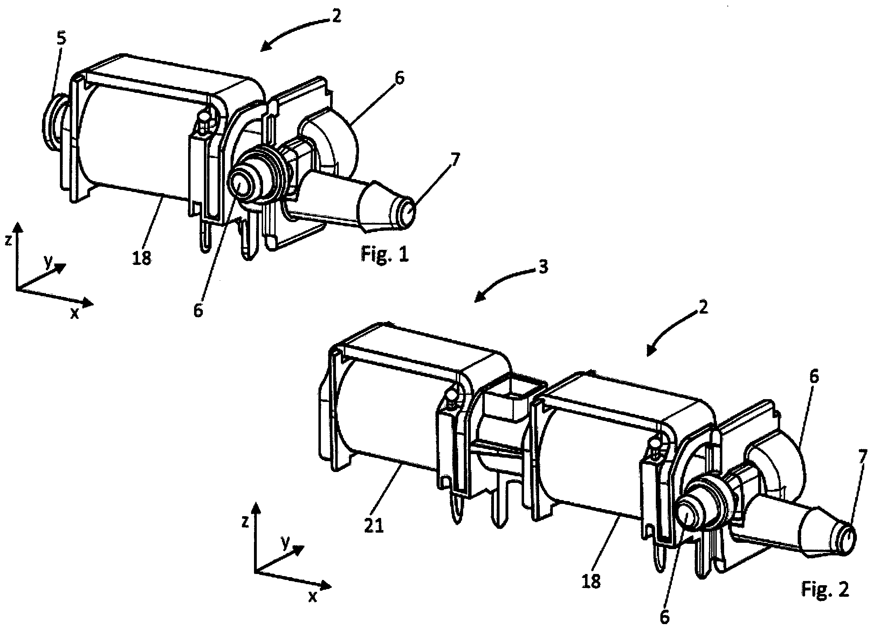

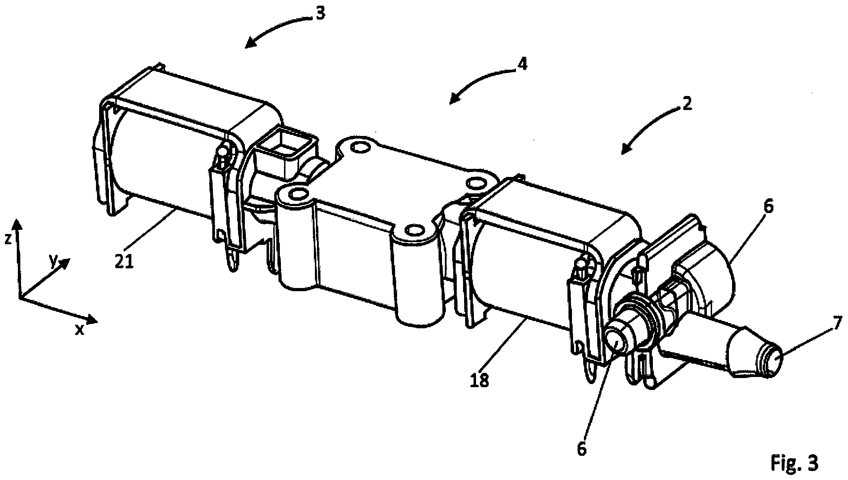

Der erfindungsgemäße Ventilblock 1 weist eine Mehrzahl Steuerventile 2 auf. Ein solches Steuerventil 2 ist in Figur 1 dargestellt. Das Steuerventil 2 kann, wie in Figur 2 dargestellt, mit einem Ablassventil 3 direkt verbunden werden oder - wie in Figur 3 dargestellt - mit einem Ablassventil 3 über ein Druckmessmodul 4 verbunden werden.

Zur Verbindung mit dem Ablassventil 3 und/oder Druckmessmodul 4 weist das Steuerventil 2 vorzugsweise Verbindungsmittel 5 auf. Diese sind im gezeigten Beispiel vorzugsweise auf der von der Druckluftzuleitung 6 abgewandten Seite des Steuerventils 2 angeordnet. Die Druckluftzuleitung 6 ist im gezeigten Beispiel in vorteilhafter Weise abschnittsweise durch die Gehäuse der einzelnen Steuerventile 2 gebildet. Hierdurch können die Steuerventile 2 aneinander gereiht werden, indem die Segmente der Druckluftleitung 6, die in die Gehäuse der Steuerventile 2 integriert sind, miteinander verbunden werden. Im gezeigten Beispiel kann dies vorteilhafterweise durch Ineinanderstecken der einzelnen Abschnitte der Druckluftzuleitung 6 geschehen.

Die beispielhaften erfindungsgemäßen Steuerventile 2 weisen in vorteilhafter Weise jeweils einen Ausgang 7 zur Verbindung des Steuerventils 2 mit einem Druckluft befüllbaren Element auf. Das Druckluft befüllbare Element ist selbst nicht dargestellt. Bei dem beispielhaften erfindungsgemäßen Steuerventil 2 ist vorzugsweise der Ausgang 7 auf der vom Verbindungsmittel 5 abgewandten Seite des Steuerventils 2 angeordnet.

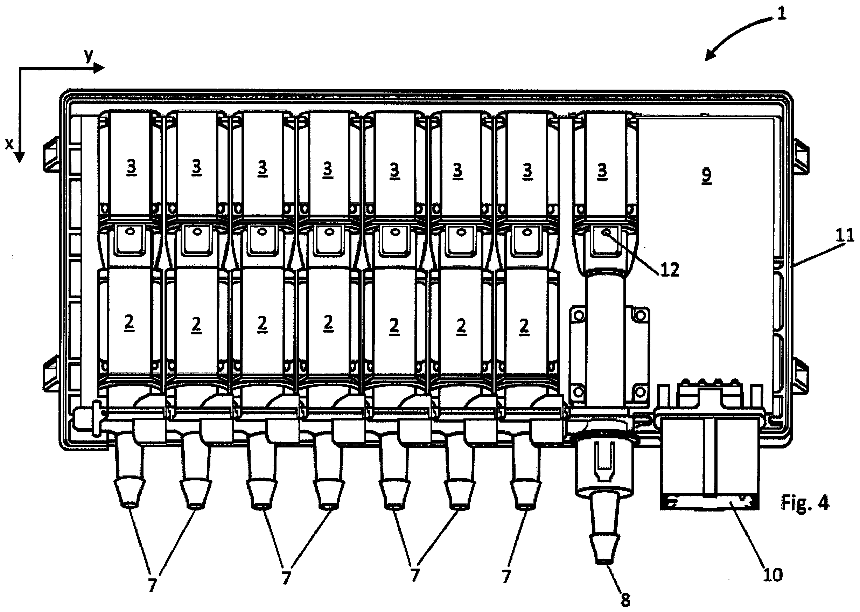

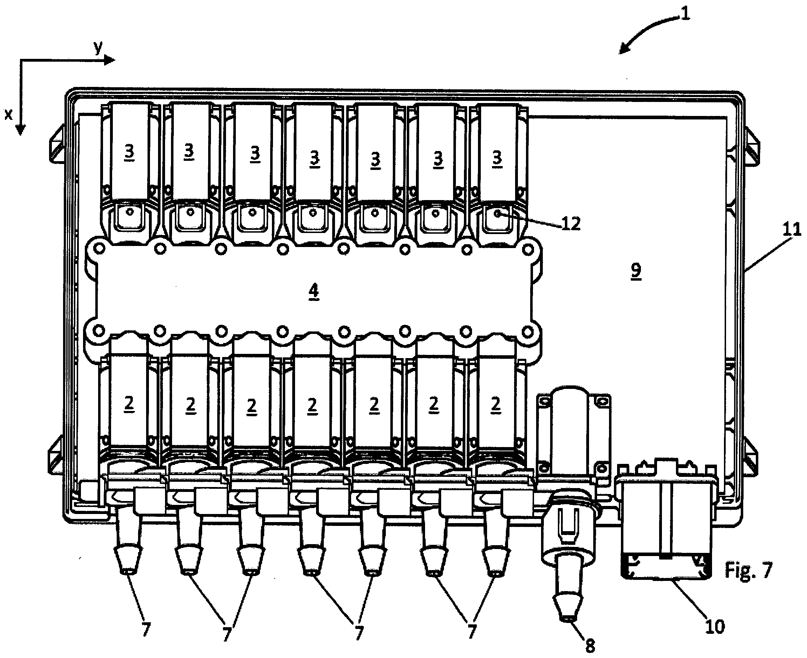

Entsprechende Aneinanderreihungen von Steuerventilen zu einer gemeinsamen Druckluftzuleitung 6 sind in den Figuren 4 und 7 dargestellt. Die Druckluftzuleitung 6 ist im Fall der in Figuren 4 und 7 dargestellten beispielhaften erfindungsgemäßen Ventilblöcke jeweils mit einem Drucklufteingang 8 verbunden, der die Druckluftzuleitung 6 und damit den jeweiligen Ventilblock 1 mit einer Drucklufterzeugungseinrichtung verbinden kann.

In der Figur 4 sind die Steuerventile 2 jeweils direkt mit den Ablassventilen 3 verbunden, währened im Fall der Figur 7 sämtliche Steuerventile 2 über ein Druckmessmodul 4 mit den Ablassventilen 3 verbunden sind. Grundsätzlich ist es natürlich auch möglich, beide Typen der Ventilverschaltung in einem Ventilblock 1 zu mischen.

Steuerventile 2, Ablassventile 3 und/oder Druckmessmodule 4 können zweckmäßig auf einer Platine 9 angeordnet werden. Über diese Platine kann dann auch die Verschaltung und Ansteuerung der Steuerventile 2, der Ablassventile 3 und/oder der Druckmessmodule 4 erfolgen. Vorteilhafterweise weist der Ventilblock 1 ein mit der Platine 9 verbundenes Kontaktelement 10, wie beispielsweise einen Stecker oder eine Buchse, auf. Platine 9, Steuerventile 2, Druckmessmodule 4 und/oder Ablassventile 3 sind vorteilhafterweise in einem gemeinsamen Gehäuse 11 des Ventilblocks 1 angeordnet. Vorzugsweise ist das Gehäuse nicht druckdicht, d.h. der Luftdruck im Gehäuse 11 entspricht in etwa dem Umgebungsdruck, so dass die Funktion der Ablassventile 3, nämlich die Druckluft befüllbaren Elemente mit der Umgebungsluft zu verbinden, in vorteilhafter Weise auch dadurch realisiert sein kann, dass die Ablassventile 3 die Druckluft befüllbaren Elemente mit der Luft im Innern des Gehäuses 11 verbinden.

Die Ablassventile 3 weisen vorzugsweise Ablassöffnungen 12 auf, die bevorzugt mit einem Dämpfungselement 13 zur Dämpfung der Geräuschentwicklung durch die ausströmende Luft versehen sind.

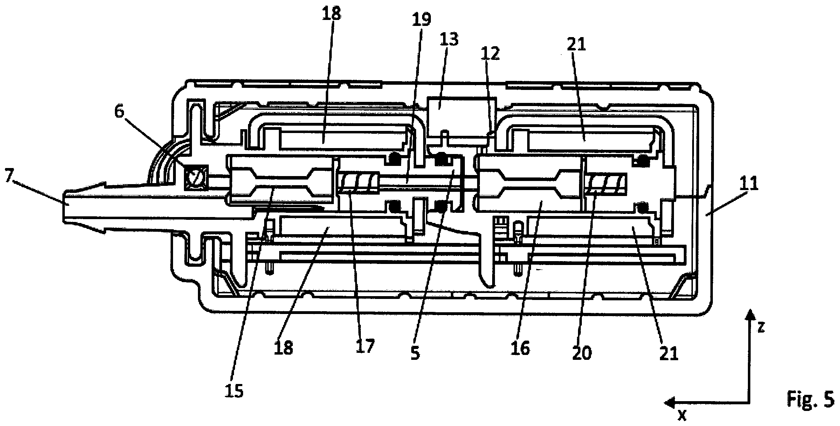

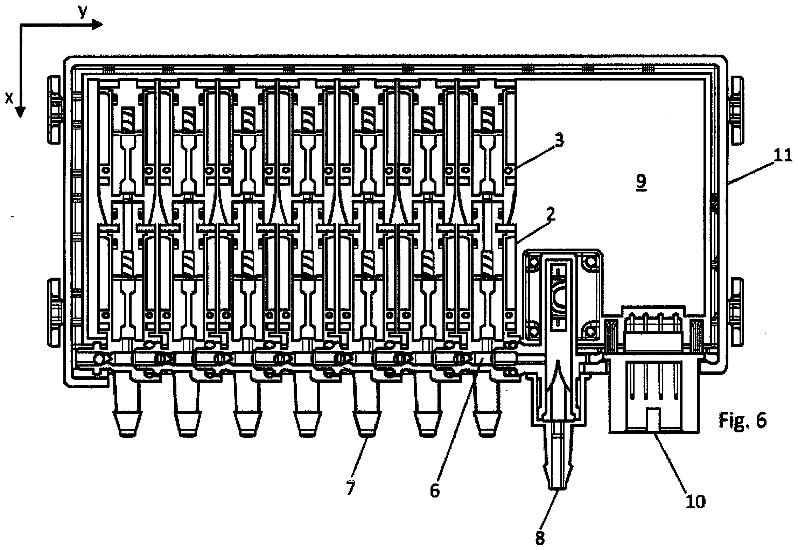

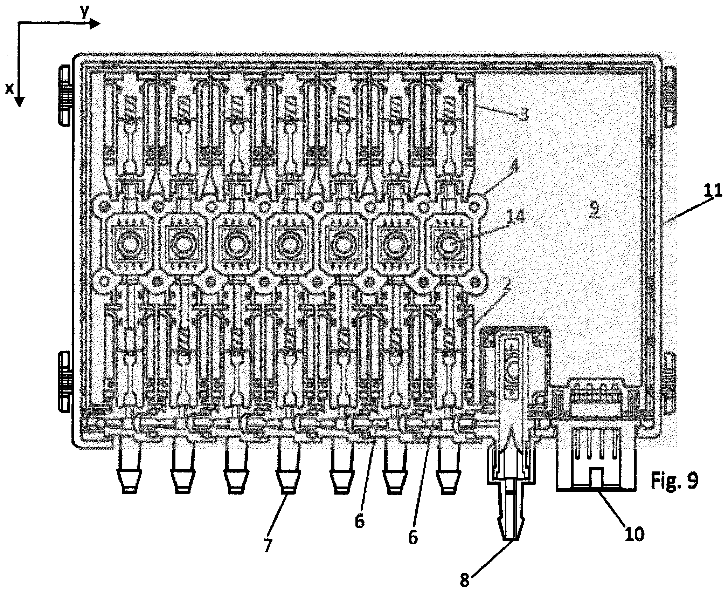

Die Funktionsweise der Ventile ist am besten aus den Schnittdarstellungen in Figuren 5, 6, 8 und 9 ersichtlich. Wird ein Druckmessmodul 4 zwischen ein Steuerventil 2 und ein Ablassventil 3 geschaltet, so weist dieses bevorzugt eine Druckmesseinrichtung 14 in seinem Inneren auf. Bei dieser kann es sich bevorzugt um eine Druckmesskammer handeln. Es ist möglich, eine Mehrzahl Druckmesseinrichtungen 14 in einem gemeinsamen Druckmessmodul 4 anzuordnen, wie dies beispielhaft in Figur 9 gezeigt ist. Ebenso ist es möglich, Druckmessmodule mit einer einzigen Druckmesseinrichtung 14 vorzusehen. Diese sind dann bevorzugt jeweils genau einem Steuerventil 2 und einem Ablassventil 3 zugeordnet.

Bevorzugt weisen die Druckmessmodule 4 an voneinander abgewandten Seiten Verbindungsmittel zur Verbindung der Druckmessmodule 4 mit den Ablassventilen 3 einerseits und den Steuerventilen 2 andererseits auf. Bevorzugt sind Druckmessmodule und Steuerventile derart gestaltet, dass eine Verbindung durch Zusammenstecken erfolgen kann. Dies ermöglicht einen vergleichsweise einfachen Zusammenbau eines erfindungsgemäßen Ventilblocks 1.

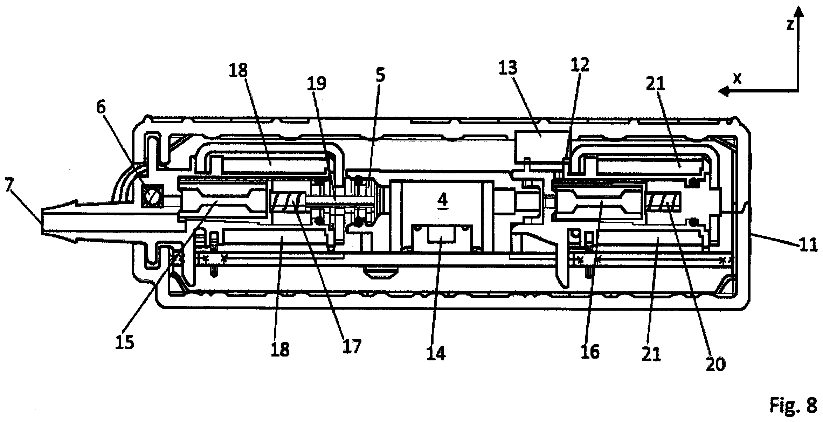

Steuerventile und/oder Ablassventile sind bevorzugt als Magnetventile ausgeführt. Im gezeigten Beispiel weisen diese Absperrkörper 15 bzw. 16 auf, die sich in paralleler Richtung bewegen. Wie insbesondere aus Figur 8 gut ersichtlich ist, weist der Absperrkörper 15 des Steuerventils 2 eine erste Stellung auf, in der die Verbindung zwischen dem Ausgang 7 und der Druckluftzuleitung 6 schließt. Im gezeigten Beispiel wird der Absperrkörper 15 vorzugsweise durch ein als Feder ausgebildetes elastisches Andruckelement 17 in dieser Stellung gehalten. Die Magnetspulen 18 des Steuerventils 2 können den Absperrkörper in eine nicht dargestellte zweite Stellung bewegen, in der der Absperrkörper die Verbindung zwischen Druckluftzuleitung 6 und Ausgang 7 freigibt, dafür jedoch die Verbindung 19 zwischen der Ventilkammer des Steuerventils 2 und dem Verbindungsmittel 5 und damit dem Druckmessmodul 4 und/oder dem Ablassventil 3 absperrt.

Bevorzugt ist das Ablassventil 3 so gestaltet, dass auch hier ein elatisches Andruckelement 20 den Absperrkörper 16 in einer ersten Stellung hält, in der der Absperrkörper 16 die Verbindung zwischen dem Steuerventil 2 bzw. dem Druckmessmodul 4 zum einen und der Ablassöffnung 12 zum anderen absperrt. Mittels der Magnetspulen 21 kann der Absperrkörper 16 in eine zweite, nicht dargestellte Stellung bewegt werden, wodurch die Verbindung zwischen den Ablassöffnungen 12 und damit der Umgebungsluft zum einen und den Druckluft befüllbaren Elementen zum anderen schlussendlich hergestellt wird.

## Patentansprüche

1. Ventilblock (1), insbesondere zur Ansteuerung Druckluft befüllbarer Elemente eines Kraftfahrzeugsitzes, mit einer Mehrzahl Ausgänge (7) zur pneumatischen Verbindung des Ventilblocks (1) jeweils mit einem oder einer Mehrzahl Druckluft befüllbarer Elemente, mit einer Mehrzahl Steuerventile (2) zur wahlweisen Beaufschlagung jeweils eines Ausgangs (7) mit Druckluft, mit einer Mehrzahl Ablassventile (3) zur Verbindung jeweils eines Ausgangs (7) mit der Umgebungsluft, wobei die Steuerventile (2) durch eine gemeinsame Druckluftzuleitung (6) mit Druckluft versorgt werden, wobei die Steuerventile (2) und die Ablassventile (3) derart gestaltet sind, dass baugleiche Ventile sowohl zur Bildung von Ventilblöcken (1) mit als auch zur Bildung von Ventilblöcken (1) ohne Druckmesseinrichtung(en) (14) zur Messung des Drucks in einem mit dem Ventilblock (1) verbundenen Druckluft befüllbaren Element verwendbar sind, wobei der Ventilblock (1) Druckmesseinrichtungen (14) aufweist, wobei die Druckmesseinrichtungen (14) als separate, mit den Ausgängen (7), Steuerventilen (2) und/oder Ablassventilen (3) verbundene Druckmessmodule (4) ausgeführt und/oder in einem separaten, mit den Steuerventilen (2) und/oder Ablassventilen (3) verbundenen Druckmessmodul (4) angeordnet sind,
**dadurch gekennzeichnet,**
**dass** die oder das Druckmessmodul(e) (4), die Ablassventile (3) und die Steuerventile (2) zur Verbindung der oder des Druckmessmodule/-s (4) mit den Ablassventilen (3) und den Steuerventilen (2) Verbindungselemente aufweist, die derart gestaltet sind, dass mit ihnen wahlweise die oder das Druckmessmodul(e) (4) mit den Ablassventilen (3) und den Steuerventilen (2) oder die Ablassventile (3) mit den Steuerventilen (2) verbindbar sind.

2. Ventilblock nach Anspruch 1,
**dadurch gekennzeichnet,**
**dass** die Ablassventile (3) auf einer von der Druckluftzuleitung (6) abgewandten Seite der Steuerventile (2) angeordnet sind.

3. Ventilblock nach Anspruch 1 oder 2,
**dadurch gekennzeichnet,**
**dass** die Druckluftzuleitung (6) zumindest im Wesentlichen senkrecht zu den Bewegungsrichtungen der Absperrkörper (15; 16) der Steuerventile (2) und/oder der Ablassventile (3) angeordnet ist.

4. Ventilblock nach einem der vorigen Ansprüche,
**dadurch gekennzeichnet,**
**dass** der Ventilblock (1) Druckmesskammern als Druckmesseinrichtungen (14) aufweist.

5. Ventilblock nach einem der vorigen Ansprüche,
**dadurch gekennzeichnet,**
**dass** die Verbindungselemente auf voneinender abgewandten Seiten, vorzugsweise einander gegenüberliegenden Seiten der oder des Druckmessmodule/-s (4) angeordnet sind.

6. Ventilblock nach einem der vorigen Ansprüche,
**dadurch gekennzeichnet,**
**dass** die Ablassventile (3) über die oder das Druckmessmodul(e) (4) mit den Steuerventilen (2) verbunden sind.

7. Ventilblock nach einem der vorigen Ansprüche,
**dadurch gekennzeichnet,**
**dass** die Ablassventile (3) über die Steuerventile (2) mit der Druckluftzuleitung (6) verbunden sind.

8. Ventilblock nach einem der vorigen Ansprüche,
**dadurch gekennzeichnet,**
**dass** die Druckluftzuleitung (6) wenigstens teilweise durch Teile der Steuerventile (2) gebildet ist.

9. Ventilblock nach einem der vorigen Ansprüche,
**dadurch gekennzeichnet,**
**dass** die Steuerventile (2), Ablassventile (3) und/oder die oder das Druckmessmodul(e) (4) in einem gemeinsamen Gehäuse (11) angeordnet sind.

10. Ventilblock nach einem der vorigen Ansprüche,
**dadurch gekennzeichnet,**
**dass** die Steuerventile (2) und/oder die Ablassventile (3) Spulen (18, 21) zur elektromagnetischen Betätigung der Ventile aufweisen.

11. Ventilblock nach einem der vorigen Ansprüche,
**dadurch gekennzeichnet,**
**dass** die Spulen (18, 21) der Steuerventile (2) und/ oder die Ablassventile (3) parallel ausgerichtet sind, wobei vorzugsweise die Spulen (18, 21) jeweils eines Steuerventils (2) und eines Ablassventils (3) entlang einer gemeinsamen Achse ausgerichtet sind.

12. Kraftfahrzeugsitz mit einer Mehrzahl Druckluft befüllbarer Elemente und einem Ventilblock (1) nach einem der vorigen Ansprüche, wobei die Druckluft befüllbaren Elemente mit dem Ventilblock (1) verbunden sind.

## Claims

1. A valve block (1), in particular for actuating elements of a motor vehicle seat that can be filled with pressurized air, with a plurality of outlets (7) for pneumatically connecting the valve block (1) in each case to one element or to a plurality of elements that can be filled with pressurized air, with a plurality of control valves (2) for the selective application of pressurized air to a respective outlet (7), with a plurality of discharge valves (3) for connecting a respective outlet (7) to the ambient air, wherein the control valves (2) are supplied with pressurized air by a common pressurized air supply line (6), wherein the control valves (2) and the discharge valves (3) are designed in such a manner that valves of identical design can be used both for forming valve blocks (1) with and also for forming valve blocks (1) without pressure measurement device(s) (14) for measuring the pressure in an element which is connected to the valve block (1) and can be filled with pressurized air, wherein the valve block (1) comprises pressure measurement devices (14), wherein the pressure measurement devices (14) are designed as separate pressure measurement modules (4) connected to the outlets (7), control valves (2) and/or discharge valves (3) and/or are arranged in a separate pressure measurement module (4) connected to the control valves (2) and/or discharge valves (3),
**characterized in that**
the pressure measurement module(s) (4), the discharge valves (3) and the control valves (2) comprise connecting elements for connecting the pressure measurement module(s) (4) to the discharge valves (3) and the control valves (2), elements which are designed in such a manner that, by means of them, the pressure measurement module(s) (4) can be selectively connected to the discharge valves (3) and the control valves (2), or the discharge valves (3) to the control valves (2).

2. The valve block according to Claim 1,
**characterized in that**
the discharge valves (3) are arranged on a side of the control valves (2) which faces away from the pressurized air supply line (6).

3. The valve block according to Claim 1 or 2,
**characterized in that**
the pressurized air supply line (6) is arranged at least substantially perpendicularly to the movement directions of the shut-off body (15, 16) of the control valves (2) and/or of the discharge valves (3).

4. The valve block according to any one of the preceding claims,
**characterized in that**
the valve block (1) comprises pressure measurement chambers as pressure measurement devices (14).

5. The valve block according to any one of the preceding claims,
**characterized in that**
the connecting elements are arranged on sides of the pressure measurement module(s) (4) which face away from one another, preferably on opposite sides.

6. The valve block according to any one of the preceding claims,
**characterized in that**
the discharge valves (3) are connected via the pressure measurement module(s) (4) to the control valves (2).

7. The valve block according to any one of the preceding claims,
**characterized in that**
the discharge valves (3) are connected via the control valves (2) to the pressurized air supply line (6).

8. The valve block according to any one of the preceding claims,
**characterized in that**
the pressurized air supply line (6) is formed at least partially by parts of the control valve (2).

9. The valve block according to any one of the preceding claims,
**characterized in that**
the control valves (2), discharge valves (3) and/or the pressure measurement module(s) (4) are arranged in a common housing (11).

10. The valve block according to any one of the preceding claims,
**characterized in that**
the control valves (2) and/or the discharge valves (3) comprise coils (18, 21) for the electromagnetic actuation of the valves.

11. The valve block according to any one of the preceding claims,
**characterized in that**
the coils (18, 21) of the control valves (2) and/or the discharge valves (3) are oriented parallel, wherein preferably the coils (18, 21) respectively of a control valve (2) and of a discharge valve (3) are oriented along a common axis.

12. A motor vehicle seat with a plurality of elements that can be filled with pressurized air, and with a valve block (1) according to any one of the preceding claims, wherein the elements that can be filled with pressurized air are connected to the valve block (1).

## Revendications

1. Bloc de soupapes (1), en particulier pour la commande d'éléments d'un siège de véhicule automobile pouvant être remplis d'air comprimé, avec une pluralité de sorties (7) pour la liaison pneumatique du bloc de soupapes (1) à un ou à plusieurs éléments pouvant être remplis d'air comprimé, avec une pluralité de soupapes de commande (2) afin d'appliquer respectivement, en option, de l'air comprimé sur une sortie (7), avec une pluralité de soupapes de décharge (3) pour relier respectivement une sortie (7) à l'air ambiant, sachant que les soupapes de commande (2) sont alimentées en air comprimé par l'intermédiaire d'une conduite d'alimentation en air comprimé (6) commune, sachant que les soupapes de commande (2) et les soupapes de décharge (3) sont conçues de manière à ce que des soupapes de même construction puissent être utilisées aussi bien pour la formation de blocs de soupapes (1) pourvus ou de blocs de soupapes (1) non pourvus de dispositif(s) de mesure de pression, destinés à mesurer la pression dans un élément pouvant être rempli d'air comprimé, relié au bloc de soupapes (1), le bloc de soupapes (1) présentant des dispositifs de mesure de pression (14), sachant que les dispositifs de mesure de pression (14) sont réalisés sous la forme de modules de mesure de pression particuliers, reliés aux sorties (7), aux soupapes de commande (2) et / ou aux soupapes de décharge (3), et / ou sont disposés dans un module de mesure de pression (4) particulier, relié aux soupapes de commande (2) et / ou aux soupapes de décharge (3),
**caractérisé en ce que**
le ou les module(s) de mesure de pression (4) présentent des éléments de liaison, qui, destinés à relier le ou les module(s) de mesure de pression (4) aux soupapes de décharge (3) et aux soupapes de commande (2), sont conçus pour relier au choix le ou les module(s) de mesure de pression (4)' aux soupapes de décharge (3) et aux soupapes de commande (2), ou les soupapes de décharge (3) aux soupapes de commande (2).

2. Bloc de soupapes selon la revendication 1,
**caractérisé en ce que**
les soupapes de décharge (3) sont disposées sur un côté des soupapes de commande (2) qui est opposé à la conduite d'alimentation en air comprimé (6).

3. Bloc de soupapes selon revendication 1 ou 2,
**caractérisé en ce que**
la conduite d'alimentation en air comprimé (6) est disposée au moins essentiellement perpendiculairement par rapport aux directions de mouvement des corps d'obturation (15 ; 16) des soupapes de commande (2) et / ou des soupapes de décharge (3).

4. Bloc de soupapes selon l'une des revendications précédentes,
**caractérisé en ce que**
le bloc de soupapes (1) présente des chambres de mesure de pression en tant que dispositifs de mesure de pression (14).

5. Bloc de soupapes selon l'une des revendications précédentes,
**caractérisé en ce que**
les éléments de liaison sont disposés sur des côtés du module ou des modules de mesure de pression (4) détournés l'un de l'autre, de préférence opposés l'un à l'autre.

6. Bloc de soupapes selon l'une des revendications précédentes
**caractérisé en ce que**
les soupapes de décharge (3) sont reliées aux soupapes de commande (2) par l'intermédiaire du module ou des modules de mesure de pression.

7. Bloc de soupapes selon l'une des revendications précédentes,
**caractérisé en ce que**
les soupapes de décharge (3) sont reliées à la conduite d'alimentation en air comprimé (6) par l'intermédiaire des soupapes de commande (2).

8. Bloc de soupapes selon l'une des revendications précédentes,
**caractérisé en ce que**
la conduite d'alimentation en air comprimé (6) est formée, au moins partiellement, par des parties des soupapes de commande (2).

9. Bloc de soupapes selon l'une des revendications précédentes,
**caractérisé en ce que**
les soupapes de commande (2), les soupapes de décharge (3) et / ou le module ou les modules de mesure de pression (4) sont disposés dans un boîtier commun (11).

10. Bloc de soupapes selon l'une des revendications précédentes,
**caractérisé en ce que**
les soupapes de commande (2) et / ou les soupapes de décharge (3) présentent des bobines (18, 21) pour l'actionnement électromagnétique des soupapes.

11. Bloc de soupapes selon l'une des revendications précédentes,
**caractérisé en ce que**
les bobines (18, 21) des soupapes de commande (2) et / ou des soupapes de décharge (3) sont alignées parallèlement, sachant que, de préférence, les bobines (18, 21) respectivement d'une soupape de commande (2) et d'une soupape de décharge (3) sont alignées le long d'un axe commun.

12. Siège de véhicule automobile avec une pluralité d'élément pouvant être remplis d'air comprimé et avec un bloc de soupapes (1) selon l'une des revendications précédentes, sachant que les éléments pouvant être remplis d'air comprimé sont reliés au bloc de soupapes (1).
